# EUROPÄISCHE PATENTANMELDUNG

(11) **EP 2 481 373 A2**
(43) Veröffentlichungstag der Anmeldung: **01.08.2012**
(21) Anmeldenummer: 12152894.7
(22) Anmeldetag: 27.01.2012
(51) Int. Cl.: A61C 8/00

(54) **Abutment-System für ein Schraubenimplantat in einem Kieferknochen**

(30) Priorität: 28.01.2011 DE 102011009743
(71) Anmelder: Feldmann, Harald, 55288 Armsheim (DE)
(72) Erfinder: Feldmann, Harald, 55288 Armsheim (DE)
(74) Vertreter: Kodron, Felix

(57) **Zusammenfassung**

Aufgabe der vorliegenden Erfindung ist es, ein Abutment zum Aufsetzen auf ein Schraubenimplantat in einen Kieferknochen zu schaffen, welches sehr differenziert und mit einer geringen Anzahl von Grundbautypen ein weites Spektrum des Ausgleichs von Divergenzen der Implantatkörper im Kieferknochen sowie der unterschiedlichen Gingivahöhen ermöglicht.

Gelöst wird dies durch ein zweiteiliges Abutment-System, wobei eine erste Primärhülse über den Implantatkopf auf das obere, aus dem Zahnfleisch ragende Ende des Implantats aufgesetzt wird. Diese Primärhülse weist hierbei eine umlaufende außenseitige Stufe am unteren Schaft auf, die als Widerlager für eine Sekundärhülse dient, die ebenfalls auf den Implantatkopf aufgesetzt wird, wobei die Primärhülse in eine Position gedreht werden kann, die ideal für den Ausgleich der von den Implantaten ausgehenden Divergenz ist.

## Beschreibung

Die Erfindung betrifft ein Abutment-System für ein Schraubenimplantat in einem Kieferknochen gemäß dem Oberbegriff des Anspruchs 1.

Schraubenimplantate werden in den Kieferknochen von Patienten eingeschraubt als Befestigungspunkt für sowohl fest eingesetzten Zahnersatz wie auch für Suprakonstruktionen für die Verankerung von herausnehmbarem Zahnersatz. Der Implantatkörper weist hierbei einen ersten Abschnitt auf, der in den Kieferknochen eingeschraubt ist und mit diesem fest verwachsen soll, und einem aus dem Kieferknochen über das Zahnfleisch herausragenden zweiten oberen Abschnitt, der der Aufnahme einer Zahnkrone, Brücke oder eines Verbindungselementes zu einem herausnehmbaren Zahnersatzelement dient. Im Stand der Technik sind hierbei einteilige und auch zweiteilige Schraubenimplantate bekannt.

Es ist hierbei bei der Einbringung eines Implantatkörpers in den Kiefer problematisch, dass je nach Zustand des Kiefers und des Zahnfleischs eines Patienten das Implantat in unterschiedlichen Neigungswinkeln in den Kieferknochen eingebracht werden muss. Dies ist erforderlich, um eine ausreichende Stabilität des Implantats im Kieferknochen zu erreichen.

Hieraus ergibt sich bei der Anordnung mehrerer Implantate, die als Befestigungspunkte für Zahnersatz im Kiefer angeordnet sind, das Problem, dass diese in unterschiedlichen Neigungswinkeln zueinander im Kiefer eingesetzt sind. Für das Einsetzen des Zahnersatzes ergibt sich hieraus das Problem, dass bei mehreren nebeneinander angeordneten Implantaten eine gemeinsame Einschubrichtung trotz der Divergenz der Implantate erzeugt werden muß, um den Zahnersatz auf die Implantate aufsetzen zu können.

Diese Problematik der divergierend geneigten Implantatkörper im Kiefer ist bereits Gegenstand von technischen Lösungen. So offenbart beispielsweise die deutsche Gebrauchsmusterschrift G 8717956.3 ein Schraubenimplantat mit einem als Biegezone ausgebildeten Implantathals, der ein Ausrichten des Implantatkopfes nach dem Einsetzen in den Kieferknochen ermöglichen soll.

Es ist bei anderen Lösungen zudem bekannt, dass der Implantathals bereits mit einer vorgegebenen Winkeleinstellung in den Kiefer eingeschraubt wird. Allerdings ist bei diesen Lösungen grundsätzlich nachteilig, dass die Biegezone bzw. die vorab gewinkelte Zone des Implantats eine Schwachstelle darstellt, die beim Biegevorgang oder beim Einschrauben in den Kieferknochen bereits brechen kann, wodurch beispielsweise beim Einschrauben in den Kiefer der Implantathals abgedreht wird. Dies ist äußert problematisch, da der nun zum Teil in den Kiefer eingeschraubte Implantatabschnitt erst wieder aus diesem entfernt werden muss, um neuerlich arbeiten zu können.

Aus diesen Gründen soll die vorliegende Lösung keine Einwirkungen auf das eingeschraubte Implantat ausüben, die dessen Sitz im Kiefer negativ beeinflussen könnten.

Aus der DE 20 2007 004 943 ist ein einteiliges Schraubenimplantat für einen Kieferknochen offenbart, welches im unteren Bereich ein Kompressionsgewinde und im oberen Bereich ein Mikrogewinde aufweist, wobei oberhalb dieses Mikrogewindes der Implantatkopf angeordnet ist, der in dieser Entwicklung als Vierkantkörper geformt ist, in dem senkrechte Nuten verlaufen. Es handelt sich hierbei um eine Form eines Implants, das für das erfindungsgemäße Abutment-System geeignet wäre. Grundsätzlich ist aber die vorliegende erfinderische Lösung für ein und mehrteilige Implantate anwendbar.

Aus der deutschen Gebrauchsmusterschrift DE 20 2008 007 189 U1 ist ein Abutment zum Aufsetzen auf ein einteiliges Schraubenimplantat in der zuvor beschrieben Bauform offenbart, welches ebenfalls explizit zum Ausgleich von Divergenzen bei den Implantatkörpern vorgesehen ist. Nach dem Einbringen des Implantats in den Kieferknochen und dem Erreichen einer erforderlichen Primärstabilität wird in dieser Lösung das hülsenförmige Abutment über den aus dem Zahnfleisch herausragenden oberen Schnitt des Implantats mit Implantatkopf geschoben, wobei in dieser Lösung das Abutment eine innenliegende Nase bzw. Rippe aufweist, die in die zuvor beschriebenen Nuten am Implantatkopf eingreift. Auf diese Weise ist die Abutmenthülse rotationssicher am Implantatkopf befestigt.

Hat sie hier ihre gewünschte Position erreicht, wird sie zusätzlich am Implantatkopf befestigt, beispielsweise geklebt oder zementiert. Es ist hierbei vorgesehen, dass die Hülsenform des Abutments gewährleistet, dass überschüssiges Material, beispielsweise Zement, aus der oberen Öffnung leicht abfließen kann. Ein eventuell verbleibender oberer Abschnitt des Implantatkopfes kann nun geschliffen werden. Auf diese Weise ist eine Basis erreicht, die nun in weiteren Arbeitsschritten wie ein verbliebener Zahnstumpf für die Aufnahme des Zahnersatzes präpariert werden kann.

Durch diese Lösung wird bereits erreicht, dass je nach spezieller Formgebung der Abutmenthülse ein gewisses Maß an Divergenz ausgeglichen werden kann. Es ist hierbei allerdings nachteilig, dass für den Ausgleich des breiten Spektrums an Divergenzen Abutmenthülsen mit einer Vielzahl von Bauformen vorliegen müssen, um je nach Anwendungsfall die richtige Abutmenthülse wählen zu können. Es ist hierbei zum einen die Divergenz der Implantate und zum anderen auch die Gingivahöhe zu berücksichtigen, dass heisst, das Maß, welches von Implantatoberteil aus dem Zahnfleisch herausragt.

Durch die Kombination der innenliegenden Nase oder Rippe mit den Nuten in dem Implantatkopf sind der Anordnung der Abutmenthülse am Implantatkopf und somit der Ausrichtung zum Ausgleich der Divergenz klare Grenzen gesetzt. Durch das Einrasten der Rippen in den Nuten im Implantatkopf ist ein Umsetzen jeweils nur um 90° möglich.

Vor diesem Hintergrund des Standes der Technik ist es die Aufgabe der vorliegenden Erfindung, ein Abutment zum Aufsetzen auf ein Schraubenimplantat in einen Kieferknochen zu schaffen, welches sehr differenziert und mit einer geringen Anzahl von Grundbautypen ein weites Spektrum des Ausgleichs von Divergenzen der Implantatkörper im Kieferknochen sowie der unterschiedlichen Gingivahöhen ermöglicht.

Dies wird in der vorliegenden Erfindung erreicht durch ein Abutment-System gemäß den Merkmalen des Anspruchs 1.

Die Unteransprüche haben weitere zweckmäßige Ausführungsformen zu Gegenstand.

Der Kerngedanke der neuen erfinderischen Lösung liegt darin, ein zweiteiliges Abutment zu schaffen, wobei eine erste Primärhülse über den Implantatkopf auf das obere, aus dem Zahnfleisch ragende Ende des Implantats aufgesetzt wird. Diese Primärhülse weist hierbei eine umlaufende außenseitige Stufe am unteren Schaft auf, die als Widerlager für eine Sekundärhülse dient, die ebenfalls auf den Implantatkopf aufgesetzt wird.

Es ist von erfinderischer Bedeutung, dass die Primärhülse über eine innenlaufende Rille in eine Nut im Implantatkopf eingreift. Das heisst, diese Primärhülse ist rotationssicher am Implantatkörper befestigt. Durch den konischen Verlauf sowohl des oberen, aus dem Zahnfleisch ragenden Implantatabschnitts wie auch der aufgesetzten Hülse mit definiertem Innenradius ist die Höhe des Sitzes dieser Primärhülse am Implantat definiert. Das heisst, die Primär-Hülse wird bis zu einer bestimmten Höhe, in welcher deren Innenfläche auf der Außenfläche des Implantats anliegt, auf den Implantatkopf aufgeschoben und mittels der in die Nut greifenden Rille rotationssicher auf dem Implantatkopf bzw. auf dem oberen Abschnitt des Implantats gehalten. Die Innenkontur der Primärhülse ist hierbei an die Außenkontur des Implantatkopfes angepasst.

Das in einem zweiten Arbeitsschritt auf die Primärhülse aufgesetzte Sekundärhülsenteil weist nun im Gegensatz zur Primärhülse keinen innenliegenden Rippen- oder Nasenkörper auf, der diese Sekundärhülse gegen eine Rotation um das Implantat und die Primärhülse sichert. Dies ist insofern vorteilhaft, als daß nun diese Sekundärhülse auf der als Widerlager dienenden umlaufenden Stufe der Primärhülse in eine Position gedreht werden kann, die als ideal für den Ausgleich der von Implantat ausgehenden Divergenz angesehen wird. Das heisst, im Gegensatz zu bisher bekannten Lösungen kann so eine exakte Ausrichtung der Abutmenthülse auf dem Implantat erfolgen, ohne das die Abutments in einer großen Vielzahl von Bauformen vorliegenden müssen.

Das Zusammenwirken von Primär- und Sekundärhülse wird stabil erreicht durch die Abstimmung der Innenkontur der Sekundärhülse auf die Außenkontur der Primärhülse. Somit sitzt die Sekundärhülse passgenau auf der Primärhülse, wobei dies unabhängig von der jeweiligen Bauform der Primärhülse und Sekundärhülse erhalten bleibt, da alle Bauformen hier identisch ausgebildet sind. Dies ist von besonderem Vorteil, da so Primärhülsen unterschiedlichen Innenradiuses und Sekundärhülsen unterschiedlicher Bauhöhe und Außenkontur in jeglicher Kombination miteinander eingesetzt werden können.

Es muß hierbei lediglich berücksichtigt werden, dass für die Ausrichtung mittels Drehbewegung sowie für die spätere Verklebung von Primärhülse und Sekundärhülse ein Spalt zwischen der Außen- und Innenkontur verbleibt, der das Drehen der Bauteile aufeinander ermöglicht, also keine zu starke Friktion bewirkt, und ein späteres Verkleben begünstigt.

Es ist hierbei für die Herstellung der Primär- und Sekundärhülsen von untergeordneter Bedeutung, aus welchem Material diese gefertigt sind. Grundsätzlich sind Zirkon, Titan oder andere geeignete Kunststoffe und Nichtedelmetalle als Werkstoff verwendbar.

Ziel des aufgesetzten, zweiteiligen Abutments ist es hierbei, die Divergenzen der verwendeten Implantate auszugleichen und so eine gemeinsame Einschubrichtung beispielsweise einer Prothese auf den Kiefer zu ermöglichen. Die Divergenzen der Implantate können hierbei bis zu 25 Grad betragen, wobei auch grössere Divergenzen in Abhängigkeit geeigneter Fräsmaschinen überbrückt werden können.

Ein besonderer Vorteil des vorliegenden Systems ist es hierbei, das die verwendeten Sekundär- und Primärhülsen in beliebiger Kombination miteinander verwendet werden können. Hierbei unterscheiden sich die unterschiedlichen Primärhülsen in ihrem Innenradius, so dass diese in unterschiedlichen Höhen auf dem Implantat aufsitzen. Auf diese Weise können unterschiedliche Gengivahöhen durch die Verwendung einer entsprechenden Primärhülse berücksichtigt werden, die aufgrund ihres Innenradius in den gewünschten Höhe auf dem oberen Abschnitt des Implantats aufliegt.

Diese Wahl der geeigneten Primärhülse führt nun im zweiten Schritt zur Wahl der geeigneten Sekundärhülse, bei der nun wiederum die räumlichen Gegebenheiten im Kiefer berücksichtigt werden müssen. Auch hier wird aus einer Varianz von Sekundärhülsen unterschiedlicher Bauhöhe und ggf. variierend geneigter Außenflanken gewählt und die Sekundärhülse in Position gedreht, um eine ideale Ausrichtung des derart erzeugten künstlichen Zahnstumpfes im Bezug auf die spätere Einschubrichtung und die weiteren Implantate zu erreichen.

Die derart zusammengestellte Primär- und Sekundärhülse werden nun nach gewünschter Ausrichtung im zuvor beschriebenen innenliegenden Berührungsbereich zu einer Einheit verklebt. Das Ergebnis ist ein fertig verklebtes Verbindungselement zu einem später einzusetzenden Zahnersatz. Es besteht weiterhin die grundsätzliche Option, auch eine spezielle Sekundärhülse bei besonderen Anforderungen zu konfektionieren, sofern die Divergenzen das beschriebene Maß überschreiten, was aber für die Praxis vernachlässigbar ist.

Die Neigungswinkel der Aussenfläche der Sekundärhülsen gegenüber der 10-Grad-Neigung zur Implantatlängsachse können in unterschiedlichen Bauformen der Sekundärhülse in verschiedenen Stufen, beispielsweise in 2°, 4° oder 6° hergestellt werden, wobei die Basisbauform eine 2°-Neigung aufweist und so bereits die meisten Anwendungen abdecken kann.

Der Einsatzbereich dieser teleskopartigen Hülsenkombination zum Aufsetzen auf Implantate ist sowohl festsitzender als auch herausnehmbarer Zahnersatz. Eine Verwendung ist hierbei grundsätzlich auf verschiedenen Gestaltungen von Implantaten möglich, bevorzugterweise als einteiliges Implantat, wobei aber auch eine Anwendung zweiteiligen Implantaten möglich ist.

Ein besonderer Vorteil des vorliegenden Verfahrens ist auch darin zu sehen, dass die Sekundärhülse in einer vorteilhaften Ausführung der Erfindung mit einem exakt auf die Aussenkontur der Sekundärhülse angepassten Friktionselement kombinierbar ist, welches als Verbindungselement zu einem herausnehmbaren Zahnersatz fungiert. Das heisst, dieses Friktionselement ist passgenau auf die Sekundärhülse aufsetzbar, wobei durch die Passgenauigkeit die Friktionskraft einen sicheren Halt auf dem künstlich erzeugten Zahnstumpf bewirkt. Die Sekundärhülse ist hierfür als oben geschlossene Kappe ausgebildet, um die Friktionswirkung zu gewährleisten.

Im Verfahren ist dies so zu verstehen, dass wie zuvor beschrieben die Primärhülse auf das Implantat aufgesetzt und die Sekundärhülse auf der Primärhülse ausgerichtet wird. Diese zwei Elemente werden anschließend miteinander verbunden.

Nun kann das Friktionselement passgenau auf die Aussenkontur der Sekundärhülse aufgesetzt werden, wobei für eine spätere Herstellung des Zahnersatzes lediglich dieses passgenau Friktionselement in diesen Zahnersatz einzukleben ist. Es ist auf diese Weise nicht mehr erforderlich ,ein passgenaues Friktionselement bzw. einen Aussenkappe erst nach Erstellen des künstlichen Zahnstumpfes beispielsweise durch ein Einscannen herzustellen, da dieses Friktionselement von vorn herein so gefertigt ist, dass es exakt auf der Aussenkontur der Sekundärhülse aufsitzt. Es ist daher für diese Funktion des Systems von besonderer Bedeutung, dass die Sekundärhülse bzw. Sekundärkappe ohne Nachbearbeitungen durch Zuschleifen verwendet wird.

Nachfolgend wird die Erfindung anhand mehrerer Zeichnungen näher beschrieben.

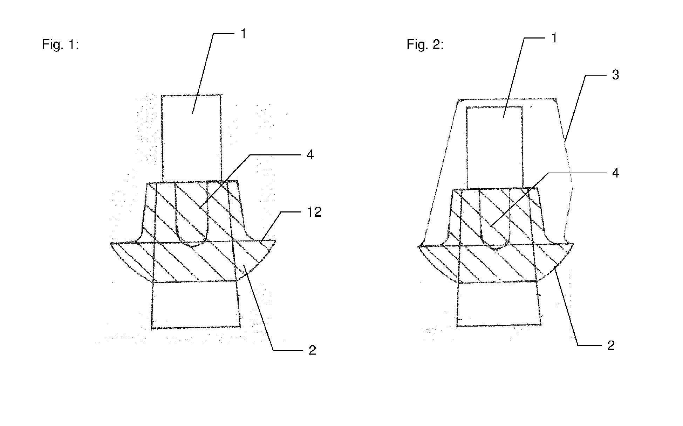

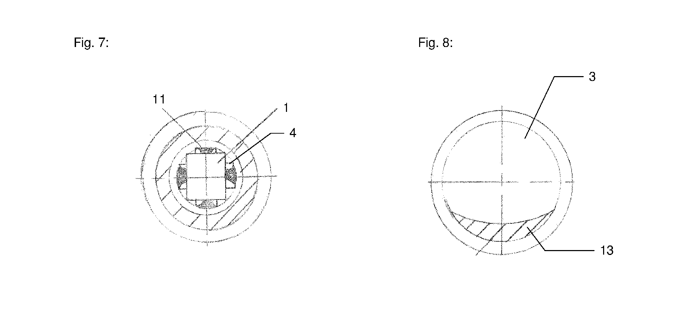

Die Figuren 1 bis 6 zeigen seitliche Schnittansichten des oberen Implantatendes mit dem aufgesetzten Verbindungssystem aus Primär- und Sekundärhülse. Figuren 7 und 8 zeigen Draufsichten auf das System.

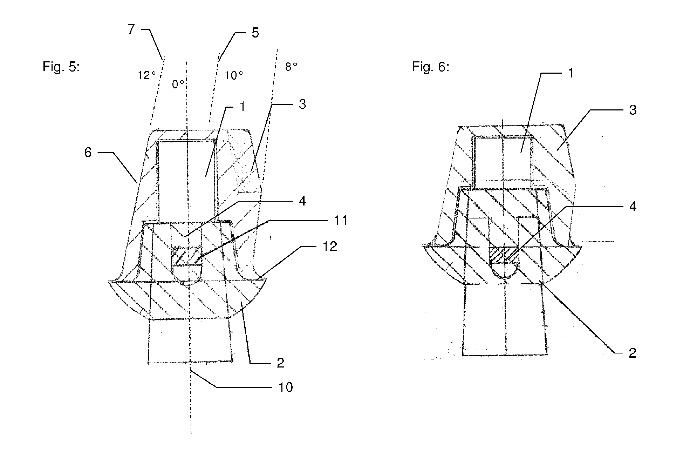

Der Einsatz des Abutment-Systems soll erst anhand der Figur 5 näher erläutert werden. Er erfolgt hierbei derart, dass nach Einsatz des Implantats 1 im Kiefer des Patienten das Abutment-System am Abdruck dieser Kiefersituation ausgerichtet wird. Der Abdruck wird auf einer Justierplatte angeordnet und mittels eines Parallelometers die gemeinsame Einschubrichtung auf die Implantate bestimmt.

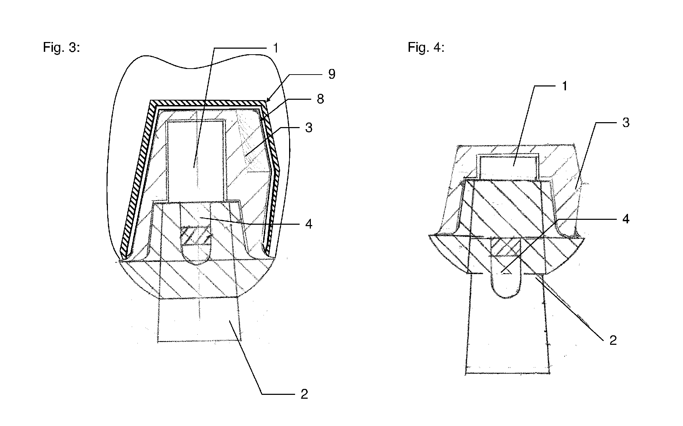

Nun werden auf die Implantatköpfe 1 die Primärhülsen 2 in Abhängigkeit von der Gingivahöhe aufgesetzt. Auf diese Primärhülsen 2 werden nun Sekundärhülsen 3 aufgesetzt, die in ihrer Bauhöhe in Abhängigkeit vom zur Verfügung stehenden räumlichen Abstand zur darüberliegenden Zahnreihe gewählt werden müssen. Sitzt beispielsweise aufgrund einer hohen Gingivahöhe die Primärhülse 2 bereits hoch auf dem Implantatkopf 1 und steht nur ein geringer Abstand zur oberen Zahnreihe zur Verfügung, so muß eine Sekundärhülse 3 geringer Bauhöhe gewählt werden (Fig. 4). Im vorliegenden Beispiel sitzt die Primärhülse tief auf dem Implantatkopf und dieser ragt daher weit über deren obere Kante hinaus.

Die gewählte Sekundärhülse 3 hat eine große Bauhöhe, da der Raum im Kiefer dies hier zulässt. Die große Bauhöhe ist hierbei insbesondere bei der Funktion als Teleskop von Vorteil, da so eine große Außenfläche für die Friktion mit dem Friktionselement einen sicheren Sitz sichert.

Diese passend gewählte Sekundärhülse 3 wird nun auf der Abstützstufe 12 der Primärhülse 2 in eine Position gedreht, die ein Aufschieben des späteren Zahnersatzes auf den so erzeugten künstlichen Zahnstumpf ermöglicht. Gegenüber der Längsachse 10 des Implantats 1 kann so eine Ausgleichsachse 5 von beispielweise 10 Grad erreicht werden, wodurch bei zwei Implantaten 1 eine gemeinsame Divergenz von 20 Grad ausgeglichen werden kann. Der konisch verlaufende Außenmantel 6 der Sekundärhülse 3 weist hierbei wie in Figur 5 dargestellt gegenüber dieser 10-Grad-Ausgleichsachse 5 eine Neigung 7 von weiteren 2 Grad auf, um das sichere Aufschieben des Zahnersatzes zu gewähren, wobei bei der Ausrichtung mittels des Parallelometers zumindest eine Anordnung parallel zu dieser Au-βenkontur erreichen muß.

Figur 1 zeigt hierbei lediglich die in einem ersten Schritt aufgesetzte Primäshülse. In der vorliegenden Ausführungsform beträgt die Neigung in etwa 7 Grad, wobei die Primärhülse 2 vergleichsweise tief auf dem Implantat 1 aufsitzt, wodurch der Implantatkopf 1 deutlich über die obere Kante der Primärhülse 2 hinausragt. Es ist im oberen Bereich der Primärhülse 2 der Einrastbereich in die Nut 4 im oberen Implantatbereich 1 erkennbar.

Figur 2 zeigt ebenfalls die aufgesetzte Primärhülse 2, wobei nun als Kontur die Sekundärhülse 3 aufgezeichnet ist, die auf die Primärhülse 2 aufgesetzt ist. Es ist hierbei erkennbar, dass die Sekundärhülse 2 über geneigte Seitenwandungen 6 verfügt, um die Divergenz des eingesetzten Implantats 1 ausgleichen zu können.

Figur 3 zeigt diese Kombination aus Implantat, Primär- und Sekundärhülse in Verbindung mit einem aufgesetzten Zahnersatz. In dieser beispielhaften Darstellung handelt es sich um einen einzelnen aufgesetzten Zahn, wobei eine Verbindung zwischen der Sekundärhülse und dem aufgesetzten Zahnersatz über ein Friktionselement 8 erzeugt ist, welches im Zahnersatz, beispielsweise mittels einer Klebeschicht 9, eingesetzt ist. Dieses Friktionselement 8 passt hierbei exakt auf die Aussenkontur der Sekundärhülse auf, weshalb eine Verbindung beispielsweise über ein Galvano hier nicht erforderlich ist.

In Figur 4 ist erkennbar, dass eine Verwendung des Systems auch bei den kurzen Implantatenden möglich ist, die nur eine geringe Höhe über den Zahnfleisch aufweisen. In dieser Ausführungsform sitzt daher die Primärhülse deutlich höher auf dem Implantat auf, wobei auch eine Sekundärhülse auf die Primärhülse aufgesetzt ist, die deutlich flacher gestaltet ist, als dies beispielsweise in den vorherigen Figuren erkennbar war.

Die Figuren 5 und 6 zeigen weitere Bauformen der Sekundärhülse was deren Bauhöhe anbetrifft. Auch ist die Platzierung der Primärhülse 2 unterschiedlich hoch am Implantatkopf 1 ausgeführt.

Die Figuren 7 und 8 zeigen Draufsichten auf das erfinderische System. Figur 6 zeigt lediglich das Implantat 1 mit der aufgesetzten Primärhülse 2. Es ist hierbei erkennbar, dass die Primärhülse 2 über entsprechende Rastkörper 11 in entsprechende Nuten 4 am Implantatkopf 1 eingreift und somit drehsicher am Implantat 1 befestigt ist. Zudem ist der umlaufende Führungsrand als Abstützstufe 12 um die Primärhülse 2 herum erkennbar, welche als Auflage für die untere umlaufende Kante der Sekundärhülse 3 dient.

Figur 8 zeigt nun die auf diese Primärhülse 2 aufgesetzte Sekundärhülse 3 in der Draufsicht, wobei im unteren Bereich der Draufsicht gestrichelt die Abschrägung 13 dieses Elements erkennbar ist. Diese dient lediglich der Platzersparnis im Mundraum des Patienten.

## Patentansprüche

1. Abutment-System für ein Schraubenimplantat in einem Kieferknochen, umfassend eine kegelstumpfförmige Abutmenthülse zum Aufsetzen auf den Implantatkopf 1, die an ihrer zum Kieferknochen weisenden Unterkante eine außenliegenden Stufe sowie an ihrer der Aufnahme des Implantatkopfes (1) dienenden Aufnahme mindestens eine Erhöhung (11) zur rotationssicheren Befestigung der Abutmenthülse am Implantatkopf (1) in einer Nut (4) am Implantatkopf (1) aufweist,
**dadurch gekennzeichnet, dass**
- das Abutment-System zusammengesetzt ist aus der als Primärhülse (2) ausgebildeten Abutmenthülse zum Aufsetzen auf den Implantatkopf (1) mit einem außenliegenden Abstützstufe (12) an ihrer zum Kieferknochen weisenden Unterkante,
- und einer Sekundärhülse (3) zum Aufsetzen auf die Primärhülse (2), die auf der außenliegenden Abstützstufe (12) an der zum Kieferknochen weisenden Unterkante der Primärhülse (2) aufsitzt und auf dieser zur Ausrichtung drehbar ist,
- wobei diese Sekundärhülse (3) in mehreren Bauformen vorliegt und mit der Primärhülse kombinierbar ist, wobei diese variierenden Bauformen eine gleich bleibende Innenkontur zum passgenauen Aufsetzen auf die Außenkontur der Primärhülse (2) bei variierenden Bauhöhen aufweisen
- und die Primärhülse (2) ebenfalls in mehreren Bauformen vorliegt und mit der Sekundärhülse kombinierbar ist, wobei diese variierenden Primärhülsen (2) bei gleichbleibender Außenkontur unterschiedliche Innenradien aufweisen zur Anpassung auf variierende Höhen des Implantatkopfes (1) über dem Zahnfleisch.

2. Abutment-System für ein Schraubenimplantat in einem Kieferknochen nach Anspruch 1,
**dadurch gekennzeichnet, dass**
die Sekundärhülse (3) nicht rotationssymmetrisch zur Implantatlängsachse (10) ausgebildet ist, sondern eine zu dieser geneigt angeordnete Ausgleichsachse (5) aufweist.

3. Abutment-System für ein Schraubenimplantat in einem Kieferknochen nach Anspruch 2,
**dadurch gekennzeichnet, dass**
die Sekundärhülse (3) eine Konizität (7) gegenüber ihrer Ausgleichsachse (5) aufweist.

4. Abutment-System für ein Schraubenimplantat in einem Kieferknochen nach einem der vorangegangenen Ansprüche,
**dadurch gekennzeichnet, dass**
der am weitesten vom Implantatkopf (1) beabstandete Teil der Sekundärhülse (3) eine außenseitige Abschrägung (13) zur Platzersparnis aufweist.

5. Abutment-System für ein Schraubenimplantat in einem Kieferknochen nach Anspruch 3,
**dadurch gekennzeichnet, dass**
eine Ausgleichsachse (5) der Sekundärhülse (3) einen Winkel von über 10 Grad einschließen kann in Bezug auf die Längsachse (10) des Implantats (1), wodurch bei zwei Implantaten (1) eine zwischen diesen Implantaten (1) bestehende Divergenz von bis zu 25 Grad ausgeglichen werden kann.

6. Abutment-System für ein Schraubenimplantat in einem Kieferknochen nach einem der vorangegangenen Ansprüche,
**dadurch gekennzeichnet, dass**
die innere Form der Primärhülse (2) passgenau zum Implantatkopf (1) ausgebildet ist.

7. Abutment-System für ein Schraubenimplantat in einem Kieferknochen nach einem der vorangegangenen Ansprüche,
**dadurch gekennzeichnet, dass**
die Sekundärhülse (3) als oberseitig geschlossene Kappe in Bezug auf Ihre Außenkontur abgestimmt ist auf ein als Verbindungselement zu einem herausnehmbaren Zahnersatz fungierendes Friktionselement (8), welches eine Innenkontur aufweist, die derart passgenau auf die Sekundärhülse (3) aufgesetzt werden kann, dass eine sichere Verbindung von Sekundärhülse (3) und Friktionselement (8) durch die Friktion zwischen den Oberflächen gewährleistet ist.
